# EUROPEAN PATENT SPECIFICATION

(11) **EP 4 033 595 B1**
(45) Date of publication and mention of the grant of the patent: **02.12.2026**
(21) Application number: 20877495.0
(22) Date of filing: 16.10.2020
(51) Int. Cl.: H01M 50/409, H01G 11/52, H01M 10/052

(54) **SEPARATION MEMBRANE FOR ELECTROCHEMICAL DEVICE, ELECTROCHEMICAL DEVICE COMPRISING SAME SEPARATION MEMBRANE, AND METHOD FOR MANUFACTURING SAME SEPARATION MEMBRANE**
TRENNMEMBRAN FÜR ELEKTROCHEMISCHE VORRICHTUNG, ELEKTROCHEMISCHE VORRICHTUNG, DIE DIESELBE TRENNMEMBRAN UMFASST, UND VERFAHREN ZUM HERSTELLEN DERSELBEN TRENNMEMBRAN
MEMBRANE DE SÉPARATION POUR DISPOSITIF ÉLECTROCHIMIQUE, DISPOSITIF ÉLECTROCHIMIQUE COMPRENANT LADITE MEMBRANE DE SÉPARATION, ET PROCÉDÉ DE FABRICATION DE LADITE MEMBRANE DE SÉPARATION

(30) Priority: 18.10.2019 KR 20190130071
(43) Date of publication of application: 27.07.2022
(73) Proprietor: LG ENERGY SOLUTION, LTD., Seoul 07335 (KR)
(72) Inventor: KIM, Min-Ji, Daejeon 34122 (KR); JEONG, So-Mi, Daejeon 34122 (KR); KIM, Chan-Jong, Daejeon 34122 (KR); HAN, Da-Kyung, Daejeon 34122 (KR)
(74) Representative: Hoffmann Eitle
(86) International application number: PCT/KR2020/014193
(87) International publication number: WO 2021/075924

(56) References cited:
- JP-B1- 5 973 674
- JP-B2- 6 576 358
- KR-A- 20140 070 484
- KR-A- 20140 128 421
- US-A- 1 784 981
- US-A1- 2017 104 197
- US-A1- 2018 315 969
- US-B2- 10 374 204

## Description

### TECHNICAL FIELD

The present application claims priority to Korean Patent Application No. 10-2019-0130071 filed on October 18, 2019 in the Republic of Korea. The present disclosure relates to an insulating porous layer for a separator of an electrochemical device, to a separator for an electrochemical device and an electrochemical device including the same.

### BACKGROUND ART

Recently, securement of safety has been given increasing attentions in the field of electrochemical devices. Particularly, a secondary battery, such as a lithium secondary battery, includes an electrode assembly including a positive electrode, a negative electrode and a separator, and the electrode assembly may be manufactured so that it may have a structure in which the separator is interposed between the positive electrode and the negative electrode. A porous film using a polyolefin-based polymer resin has been used as a separator substrate of such a lithium secondary battery. However, such a porous polymer film is shrunk or molten at high temperature to cause the problem of low heat resistance. To solve the problem, there has been suggested a porous polymer film surface-coated with an inorganic particle coating layer, or a free standing type separator merely including an inorganic material and a binder resin with no polymer separator substrate. When an inorganic material is applied to a separator as mentioned above, heat shrinking properties and safety may be improved. However, the resultant separator may undergo an increase in thickness and a dimensional change in width and length due to its volumetric swelling, resulting in defects in the appearance of a battery. In addition, the separator is spaced apart from an electrode to generate air bubbles in the battery, interfacial resistance between the electrode and the separator is increased, and lithium may be deposited in the gap between the electrode and the separator, resulting in the problem of an increase in cell resistance. Therefore, there is a need for reducing a dimensional change in a free standing type separator. In addition, there is a need for increasing the elongation of a free standing type separator, because the free standing type separator is damaged with ease by external impact.

US 1 784 981 A discloses separators for use in electric storage batteries and electrolytic cells of various sorts.

US 2018/315969 A1 discloses a separator and an electrochemical device including the same. The separator includes: a porous substrate having a plurality of pores; and a pair of porous coating layers formed on at least one surface of the porous substrate, and including a plurality of inorganic particles and a binder disposed partially or totally on the surface of the inorganic particles to connect and fix the inorganic particles with each other, wherein the binder is used in an amount of 5-40 wt % based on the total weight of the porous coating layer, the inorganic particles include boehmite particles, the binder includes a fluorine-based binder and a rubber-based binder, and the fluorine-based binder and the rubber-based binder are used at a weight ratio of 80:20-99.9:0.1.

### DISCLOSURE

### Technical Problem

The present disclosure is designed to solve the problems of the related art, and therefore the present disclosure is directed to providing a free standing type separator including a binder resin and inorganic particles. Particularly, the present disclosure is also directed to providing a separator having an improved elongation and a reduced dimensional change by introducing an elastomer to the binder resin. In addition, the present disclosure is directed to providing a separator having the above-mentioned structural characteristics. Further, the present disclosure is directed to providing an electrochemical device including a positive electrode, a negative electrode, a separator interposed between the positive electrode and the negative electrode, and an electrolyte, wherein the separator is the above-described separator. These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

According to the first embodiment of the present disclosure, there is provided an insulating porous layer for a separator of an electrochemical device including inorganic particles and a binder resin, wherein the inorganic particles in the insulating porous layer are present at a ratio of 70-95 wt% based on 100 wt% of the insulating porous layer, and the binder resin includes an elastomer, wherein the elastomer has a molecular weight (Mw) of 10,000-1,000,000 g/mol, determined by gel permeation chromatography (GPC).

According to the second embodiment of the present disclosure, there is provided the insulating porous layer as defined in the first embodiment, wherein the elastomer is present in an amount of 5-50 wt% based on 100 wt% of the binder resin.

According to the third embodiment of the present disclosure, there is provided the insulating porous layer as defined in the second embodiment, wherein the elastomer is present in an amount of 5-25 wt% based on 100 wt% of the binder resin.

According to the fourth embodiment of the present disclosure, there is provided the insulating porous layer as defined in any one of the first to the third embodiments, wherein the elastomer includes at least one selected from the group consisting of natural rubber, nitrile butadiene rubber, acrylonitrile butadiene rubber, styrene-butadiene rubber, chloroprene rubber, butadiene rubber, ethylene-propylene-diene rubber, olefin-based thermoplastic elastomer, urethane-based thermoplastic elastomer, styrene block copolymer, thermoplastic polyester elastomer, thermoplastic copolyester, thermoplastic copolyamide, and acrylated styrene butadiene rubber.

According to the fifth embodiment of the present disclosure, there is provided the insulating porous layer as defined in the fourth embodiment, wherein the elastomer has a molecular weight (Mw) of 200,000-700,000 g/mol, determined by gel permeation chromatography (GPC).

According to the sixth embodiment of the present disclosure, there is provided the insulating porous layer as defined in any one of the first to the fifth embodiments, wherein the inorganic particle includes Al₂O₃, AlOOH, Al(OH)₃, AlN, BN, MgO, Mg(OH)₂, SiO₂, ZnO, TiO₂, BaTiO₃, or a mixture thereof.

According to the seventh embodiment of the present disclosure, there is provided the insulating porous layer as defined in any one of the first to the sixth embodiments, wherein the inorganic particles have an average particle diameter of 0.001-3 µm.

According to the eighth embodiment of the present disclosure, there is provided the insulating porous layer as defined in any one of the first to the seventh embodiments, which has a thickness of 0.01-50 µm.

According to the ninth embodiment of the present disclosure, there is provided a separator for an electrochemical device, wherein the separator is a free standing type separator having the insulating porous layer according to the first embodiment alone.

According to the tenth embodiment of the present disclosure, there is provided an electrochemical device including a negative electrode, a positive electrode and a separator interposed between the negative electrode and the positive electrode, wherein the separator is the insulating porous layer according to the first embodiment.

According to the eleventh embodiment of the present disclosure, there is provided a separator for an electrochemical device according to the first embodiment, wherein the separator does not include a separator substrate.

### Advantageous Effects

The separator according to an embodiment of the present disclosure essentially includes inorganic particles and a binder resin, is used as a free standing type separator including no separator substrate, such as a polymer resin film, and causes no problem of heat shrinking. In addition, the separator according to an embodiment of the present disclosure shows a small dimensional change and a high elongation by virtue of the introduction of an elastomer, and is prevented from being damaged by external impact.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram illustrating the elongation of each of the separators according to Example 1, Example 2 and Comparative Example 1.
FIG. 2 is a diagram illustrating the resistance of each of the separators according to Example 1, Example 2 and Comparative Example 1.
FIG. 3 is a diagram illustrating the dimensional change of each of the separators according to Example 1, Example 2 and Comparative Example 1.
FIG. 4 and FIG. 5 show photographic images illustrating the negative electrode-separator lamination products according to Example 3 and Example 4, respectively, after being impregnated with an electrolyte.
FIG. 6 shows a photographic image illustrating the negative electrode-separator lamination product according to Comparative Example 2, after being impregnated with an electrolyte.

### BEST MODE

Hereinafter, preferred embodiments of the present disclosure will be described in detail with reference to the accompanying drawings.

As used herein, the singular forms "a", "an" and "the" are intended to include the plural forms as well, unless the context clearly indicates otherwise.

In addition, it will be understood that the terms "includes", "has", or "comprises" when used in this specification, refer to the presence of any stated shapes, numbers, steps, operations, members, elements and/or groups thereof, but do not preclude the addition of one or more other shapes, numbers, steps, operations, members, elements and/or groups thereof.

In one aspect of the present disclosure, there is provided an insulating porous layer. The insulating porous layer may be used as a separator for an electrochemical device. Herein, a typical example of the electrochemical device may be a rechargeable secondary battery including a unit cell formed by stacking a positive electrode, a separator and a negative electrode, successively.

In another aspect of the present disclosure, there is provided a separator for an electrochemical device including the insulating porous layer, particularly, a free standing type separator including the insulating porous layer alone. According to the present disclosure, the free standing type separator is a separator including the insulating porous layer(s) alone, and not including any other element (e.g. separator substrate, such as a polymer resin film) than the insulating porous layer according to the present disclosure.

According to an embodiment of the present disclosure, the insulating porous layer is an organic/inorganic composite film including inorganic particles and a binder resin. In the insulating porous layer, the inorganic particles are bound to one another by the binder resin so that they may be packed in a layered structure. According to the present disclosure, the organic/inorganic composite film has porous characteristics derived from the pores formed by the interstitial volumes among the inorganic particles. The interstitial volumes mean spaces defined by the inorganic particles facing one another substantially in a packed structure of the inorganic particles. The pores are interconnected with one another so that gases or liquids may pass through a substrate from one surface of the substrate to the other surface thereof.

According to an embodiment of the present disclosure, there is no particular limitation in the inorganic particles, as long as they are electrochemically stable and have a particle size compatible with the thickness of the insulating porous layer. In other words, there is no particular limitation in the inorganic particles used according to the present disclosure, as long as they cause no oxidation and/or reduction in the range (e.g. 0-5 V based on Li/Li⁺) of operating voltage of an applicable battery. For example, the inorganic particles may have a particle diameter of 0.001-3 µm, or 0.001-2 µm. When the inorganic particles have a size of less than 0.001 µm, dispersibility may be degraded. When the inorganic particles have a size of larger than 3 µm, it is difficult to provide the resultant insulating porous layer in the form of a thin film. Therefore, when the insulating porous layer is applied alone to a separator, the separator shows an excessively large pore size to cause degradation of insulation properties. Considering the above, the inorganic particles may be controlled to have a particle diameter of about 20-500 nm.

Non-limiting examples of the inorganic particles include Al₂O₃, AlOOH, Al(OH)₃, AlN, BN, MgO, Mg(OH)₂, SiO₂, ZnO, TiO₂, BaTiO₃ or a mixture thereof. The insulating porous layer may include at least one of the above-listed inorganic particles.

The insulating porous layer may include the inorganic particles in an amount of 70-95 wt% based on 100 wt% of the insulating porous layer. For example, the content of the inorganic particles may be 90 wt% or less within the above-defined range. When the content of the inorganic particles is excessively high, the content of the binder resin is reduced, and thus the inorganic particles may be detached easily from the insulating porous layer and the insulating porous layer may show low durability, including easy brittleness. On the contrary, when the content of the inorganic particles is excessively low, the proportion of the binder resin is increased and the insulating porous layer shows low porosity, resulting in degradation of resistance characteristics.

In addition, the binder resin provides the inorganic particles with binding force and insulation properties and imparts the binding force between the porous layer and electrodes. According to the present disclosure, the binder resin includes an elastomer. According to the present disclosure, the elastomer refers to a material having such a degree of elasticity that it can be elongated to two times or more of its original length under stress, and then can be shrunk rapidly to its original length upon relaxation. The binder resin may include the elastomer in an amount of 5-50 wt%, or 5-25 wt%, based on 100 wt% of the binder resin. When the content of the elastomer is lower than 5 wt%, it is not possible to provide the effect of the elastomer sufficiently. On the other hand, when the content of the elastomer is larger than 50 wt%, slurry prepared by mixing the elastomer with another binder resin, such as a polyvinylidene fluoride-based binder resin, may show an instable phase undesirably. Particularly, the elastomer may include at least one selected from natural rubber, nitrile butadiene rubber, acrylonitrile butadiene rubber, styrene-butadiene rubber, chloroprene rubber, butadiene rubber, ethylene-propylene-diene rubber, olefin-based thermoplastic elastomer, urethane-based thermoplastic elastomer, styrene block copolymer, thermoplastic polyester elastomer, thermoplastic copolyester, thermoplastic copolyamide, acrylated styrene butadiene rubber, or the like. According to an embodiment of the present disclosure, the elastomer may be one capable of being dissolved in a solvent. The elastomer has a molecular weight (Mw) of 10,000-1,000,000 g/mol, preferably 200,000-700,000 g/mol. The molecular weight is determined by gel permeation chromatography (GPC).

Meanwhile, if necessary, the binder resin may further include any one selected from the group consisting of a polyvinylidene fluoride (PVdF)-based resin, styrene-butadiene rubber (SBR), polytetrafluoroethylene (PTFE), polyethylene glycol (PEG), polypropylene glycol (PPG), toluene diisocyanate (TDI), polymethyl methacrylate, polyacrylonitrile, polyvinyl pyrrolidone, polyvinyl acetate, polyethylene-co-vinyl acetate, polyethylene oxide, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan, carboxymethyl cellulose, acrylonitrile-styrene-butadiene copolymer and polyimide, or a mixture of two or more of them, besides the elastomer.

The insulating porous layer is not particularly in its thickness. For example, the insulating porous layer may have a thickness of 0.01-50 µm.

In addition, the insulating porous layer is not particularly limited also in its pore size and porosity. Preferably, the insulating porous layer may have a pore size of 0.001-3 µm, or 0.001-2 µm, and a porosity of 10-90 vol%. The pore size and porosity largely depend on the size of inorganic particles, but may be affected by the type of a binder resin. For example, when using inorganic particles having a particle diameter of 1 µm or less, the pore size may be approximately 1 µm or less. Such a pore structure is filled with the subsequently injected electrolyte, and the electrolyte functions to conduct ions. When the pore size and porosity are less than 0.001 µm and less than 10 vol%, respectively, the resultant insulating porous layer may function as a resistance layer. When the pore size and porosity are more than 10 µm and more than 90 vol%, respectively, the resultant insulating porous layer may show degraded mechanical properties.

Meanwhile, according to the present disclosure, porosity and pore size may be determined by using BELSORP (BET system) available from BEL JAPAN Co. with an adsorption gas, such as nitrogen, or by using, e.g., mercury intrusion porosimetry, or capillary flow porosimetry. According to an embodiment of the present disclosure, the porosity may be calculated from the thickness and weight of the resultant coating layer and the theoretical density of the coating layer.

According to an embodiment of the present disclosure, the insulating porous layer may be obtained by preparing a composition for forming an insulating porous layer including inorganic particles and a binder resin, and forming the composition into a sheet-like film.

First, the composition for forming an insulating porous layer may be obtained by preparing a polymer solution including a binder resin dissolved in a solvent and a dispersion including inorganic particles dispersed in a solvent, individually, and mixing the polymer solution with the dispersion. The inorganic particles may be added, after they are pulverized to a predetermined average particle diameter. Otherwise, the inorganic particles are added to a solvent, and then dispersed in the solvent, while being controlled to have a predetermined particle diameter by using, e.g., a ball milling process, thereby providing a dispersion. Meanwhile, according to an embodiment of the present disclosure, the solid content in the polymer solution, except the solvent, may be controlled to 10 wt% or less, such as 5-7 wt%. When the solid content is larger than 10 wt%, the binder may not be dissolved in the solvent sufficiently. In addition, it is preferred to control the solid content in the dispersion, except the solvent, to 30-70 wt%.

The polymer solution may be mixed with the dispersion by using a mixing device, such as a homodiper. For example, when the composition is prepared by using a homodiper, mixing may be carried out at about 2000 rpm for about 30 minutes.

Then, the composition is applied to a release sheet and dried to form an insulating porous layer. The composition may be applied through a coating method selected suitably from the known coating methods, including a dip coating process, a slot die coating, a microgravure coating process, a wire coating process and a doctor blade coating process. Particularly, it is preferred to use a slot die coating or dip coating process. A slot die coating process includes coating a composition supplied through a slot die onto the whole surface of a release sheet and is capable of controlling the thickness of the coated composition depending on the flux supplied from a metering pump. In addition, a dip coating process includes dipping a release sheet into a tank containing a composition to carry out coating and is capable of controlling the thickness of the coated composition depending on the concentration of the composition and the rate of removing the release sheet from the composition tank.

Meanwhile, the release sheet is not particularly limited, as long as it does not damage the resultant insulating porous layer upon removal. For example, the release sheet may include a glass plate or a polymer film made of polyethylene terephthalate.

The solvent used for the composition preferably has a solubility parameter similar to the solubility of the binder resin to be used and a low boiling point to facilitate removal of the organic solvent during a drying process. This is because such a solvent facilitates homogeneous mixing and the subsequent removal. Considering the above, the solvent preferably has a boiling point of 80-180°C, or 100-165°C. Non-limiting examples of the solvent include acetone, tetrahydrofuran, methylene chloride, chloroform, dimethyl formamide, N-methyl-2-pyrrolidone (NMP), cyclohexane, mesitylene, dimethyl acetamide, dimethyl sulfone, dimethyl carbonate, methyl ethyl ketone, methyl acetate, and cyclohexanone. The above solvents may be used alone or in combination. Preferably, the solvent may include any one selected from N-methyl-2-pyrrolidone (NMP), cyclohexane, mesitylene, dimethyl acetamide, dimethyl sulfone and dimethyl carbonate, or a mixture of two or more of them.

Then, the composition is dried to remove the solvent and a sheet-like insulating porous layer is obtained. The composition may be dried naturally or under heating. The heating may be generally carried out through a heating process, such as a heater, an oven, a resistance heating, an electrical induction heating, a hot air heating, or an infrared ray heating. The release sheet may function not only as a support on which the slurry is coated but also as a means for drying the slurry and removing the organic solvent. Therefore, the heating may be carried out by heating the release sheet, after providing the release sheet with a heating means. The heating may be carried out at a temperature of about 40-200°C, preferably about 60-180°C. In addition, the heating time is not particularly limited, but may be about 10 minutes to 2 hours. After the composition is dried completely, the release sheet is removed to obtain an insulating porous layer.

In another aspect, there is provided an electrochemical device including the separator according to the present disclosure. The electrochemical device includes a positive electrode, a negative electrode and a separator interposed between the positive electrode and the negative electrode, wherein the separator is the above-described insulating porous layer according to an embodiment of the present disclosure. In a variant, the separator may be a composite separator including the insulating porous layer laminated with a porous polymer film.

The electrochemical device includes any device which carries out electrochemical reaction, and particular examples thereof include all types of primary batteries, secondary batteries, fuel cells, solar cells or capacitors, such as super capacitor devices. Particularly, among the secondary batteries, lithium secondary batteries, including lithium metal secondary batteries, lithium ion secondary batteries, lithium polymer secondary batteries or lithium ion polymer batteries, are preferred.

According to the present disclosure, the positive electrode includes a positive electrode current collector, and a positive electrode active material layer formed on at least one surface of the current collector and containing a positive electrode active material, a conductive material and a binder resin. The positive electrode active material may include any one selected from: layered compounds, such as lithium manganese composite oxide (LiMn₂O₄, LiMnO₂, etc.), lithium cobalt oxide (LiCoO₂) and lithium nickel oxide (LiNiO₂), or those compounds substituted with one or more transition metals; lithium manganese oxides such as those represented by the chemical formula of Li₁₊ₓMn₂₋ₓO₄ (wherein x is 0-0.33), LiMnO₃, LiMn₂O₃ and LiMnO₂; lithium copper oxide (Li₂CuO₂); vanadium oxides such as LiV₃O₈, LiV₃O₄, V₂O₅ or Cu₂V₂O₇; Ni-site type lithium nickel oxides represented by the chemical formula of LiNi₁₋ₓMₓO₂ (wherein M is Co, Mn, Al, Cu, Fe, Mg, B or Ga, and x is 0.01-0.3); lithium manganese composite oxides represented by the chemical formula of LiMn₁₋ₓMₓO₂ (wherein M = Co, Ni, Fe, Cr, Zn or Ta, and x = 0.01-0.1) or Li₂Mn₃MO₈ (wherein M = Fe, Co, Ni, Cu or Zn); LiMn₂O₄ in which Li is partially substituted with an alkaline earth metal ion; disulfide compounds; and Fe₂(MoO₄)₃; or a mixture of two or more of them.

According to the present disclosure, the negative electrode includes a negative electrode current collector, and a negative electrode active material layer formed on at least one surface of the current collector and containing a negative electrode active material, a conductive material and a binder resin. The negative electrode may include, as a negative electrode active material, any one selected from: lithium metal oxide; carbon such as nongraphitizable carbon or graphite-based carbon; metal composite oxides, such as LiₓFe₂O₃ (0 ≤ x ≤ 1), LiₓWO₂ (0 ≤ x ≤ 1), SnₓMe₁₋ₓMe' _{y}O_{z} (Me: Mn, Fe, Pb, Ge; Me': Al, B, P, Si, elements of Group 1, 2 or 3 in the Periodic Table, halogen; 0 < x ≤ 1; 1 ≤ y ≤ 3; 1 ≤ z ≤ 8); lithium metal; lithium alloy; silicon-based alloy; tin-based alloy; metal oxides, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymers, such as polyacetylene; Li-Co-Ni type materials; and titanium oxide; or a mixture of two or more of them.

According to an embodiment of the present disclosure, the conductive material may be any one selected from the group consisting of graphite, carbon black, carbon fibers or metal fibers, metal powder, conductive whiskers, conductive metal oxides, activated carbon and polyphenylene derivatives, or a mixture of two or more of such conductive materials. More particularly, the conductive material may be any one selected from natural graphite, artificial graphite, Super-P, acetylene black, Ketjen black, channel black, furnace black, lamp black, thermal black, denka black, aluminum powder, nickel powder, zinc oxide, potassium titanate and titanium dioxide, or a mixture of two or more such conductive materials.

The current collector is not particularly limited, as long as it causes no chemical change in the corresponding battery and has high conductivity. Particular examples of the current collector may include stainless steel, copper, aluminum, nickel, titanium, baked carbon, aluminum or stainless steel surface-treated with carbon, nickel, titanium or silver.

The binder resin may be a polymer used currently for an electrode in the art. Non-limiting examples of the binder resin include, but are not limited to: polyvinylidene fluoride-co-hexafluoropropylene, polyvinylidene fluoride-co-trichloroethylene, polymethyl methacrylate, polyethylhexyl acrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethylpullulan, cyanoethy1polyvinyla1cho1, cyanoethyl cellulose, cyanoethyl sucrose, pullulan, and carboxymethyl cellulose.

The electrode assembly prepared as described above may be introduced to a suitable casing and an electrolyte may be injected thereto to obtain a battery.

According to the present disclosure, the electrolyte is a salt having a structure of A⁺B⁻, wherein A⁺ includes an alkali metal cation such as Li⁺, Na⁺, K⁺ or a combination thereof, and B⁻ includes an anion such as PF₆⁻, BF₄⁻, Cl⁻, Br⁻, I⁻, ClO₄⁻, AsF₆⁻, CH₃CO₂⁻, CF₃SO₃⁻, N(CF₃SO₂)₂⁻, C(CF₂SO₂)₃⁻ or a combination thereof, the salt being dissolved or dissociated in an organic solvent selected from propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), gamma-butyrolactone (γ-butyrolactone), ester compounds and mixtures thereof. However, the present disclosure is not limited thereto.

In addition, the present disclosure provides a battery module which includes a battery including the electrode assembly as a unit cell, a battery pack including the battery module, and a device including the battery pack as an electric power source. Particular examples of the device include, but are not limited to: power tools driven by the power of an electric motor; electric cars, including electric vehicles (EV), hybrid electric vehicles (HEV), plug-in hybrid electric vehicles (PHEV); electric two-wheeled vehicles, including E-bikes and E-scooters; electric golf carts; and electric power storage systems.

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

### Example 1

Nitrile-butadiene rubber (Mw: 600,000 g/mol) was dissolved in N-methyl pyrrolidone (NMP) to prepare a polymer solution (first solution) having a solid content of 5 wt%. In addition, PVdF was dissolved in NMP to prepare a polymer solution (second solution), wherein the PVdF had a molecular weight (Mw) of 1,400,000 g/mol and a polymer solution had a solid content of 6 wt%. Then, AlOOH (particle diameter D₅₀: 40 nm) was introduced to NMP and dispersed therein by using a ball mill to prepare a dispersion (solid content 50 wt%). The ball milling was carried out with a bead size of 0.5 cm for 3 hours. After that, the first polymer solution, the second polymer solution and the dispersion were mixed with a homodiper to prepare a composition for an insulating porous layer. The mixing was carried out at a rate of about 2000 rpm for about 30 minutes. In the composition for an insulating porous layer, the weight ratio of the content of the binder resin to that of the inorganic particles were about 20:80. In addition, the weight ratio of NBR and PVdF was 21:79. The resultant composition was applied to a glass plate by using a bar coater device to a thickness of 400 µm.

The glass plate coated with the composition was introduced to a convection oven and dried at 150°C for 30 minutes, and then the glass plate was removed to obtain an insulating porous layer. The resultant insulating porous layer was cut into a size of 8 cm x 10 cm (width x length).

### Example 2

An insulating porous layer was prepared in the same manner as Example 1, except that hydrogenated NBR (H-NBR) (Mw: 600,000 g/mol) was used as a binder resin instead of NBR.

### Comparative Example 1

An insulating porous layer was prepared in the same manner as Example 1, except that PVdF (Mw: 1,400,000 g/mol) was used as a binder resin in the total amount of binder.

### Manufacture Example: Method for Manufacturing Negative Electrode

First, 97.6 parts by weight of graphite as a negative electrode active material, 1.2 parts by weight of styrene-butadiene rubber (SBR) as a binder and 1.2 parts by weight of carboxymethyl cellulose (CMC) were mixed to prepare a negative electrode mixture. Then, the negative electrode mixture was dispersed in ion exchange water to prepare negative electrode slurry. The slurry was coated on both surfaces of copper foil having a thickness of 20 µm, followed by drying and pressing, to obtain a negative electrode.

### Example 3

A laminated structure was obtained by stacking the insulating porous layer according to Example 1 with the negative electrode prepared as described in the above Manufacture Example and carrying out lamination at 100°C under 6.5 MPa.

### Example 4

A laminated structure was obtained by stacking the insulating porous layer according to Example 2 with the negative electrode prepared as described in the above Manufacture Example and carrying out lamination at 100°C under 6.5 MPa.

### Comparative Example 2

A laminated structure was obtained by stacking the insulating porous layer according to Comparative Example 1 with the negative electrode prepared as described in the above Manufacture Example and carrying out lamination at 100°C under 6.5 MPa.

### Determination of Elongation

Each of the insulating porous layers according to Examples and Comparative Example was prepared with a size of 100 mm x 20 mm in a number of 6 sheets for each Example and Comparative Example. Each sheet was drawn by using an Instron instrument at room temperature at a rate of 500 mm/min. to determine the elongation at break. The elongation was shown as the average value of six sheets of each insulating porous layer. Herein, the sample area used for determination was 20 mm x 20 mm.

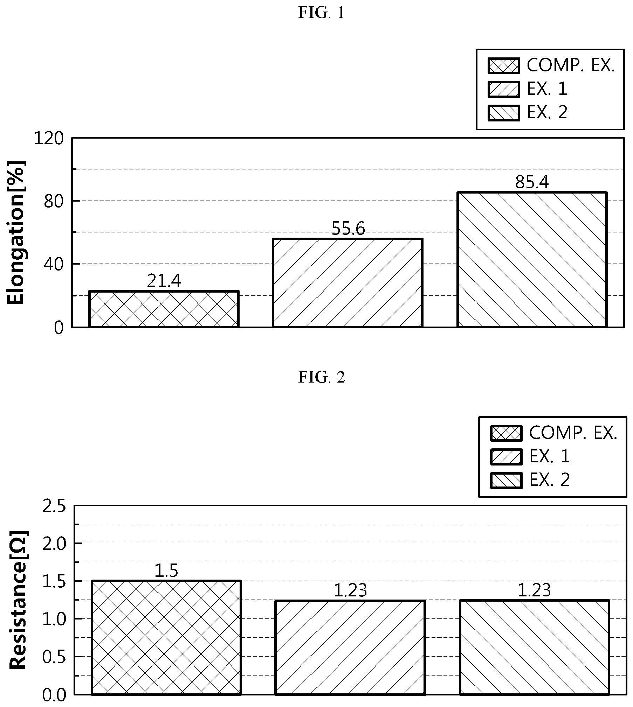

Referring to FIG. 1, the insulating porous layers according to Examples 1 and 2 show a higher elongation as compared to Comparative Example 1.

### Evaluation of Electrolyte Impregnation (1)

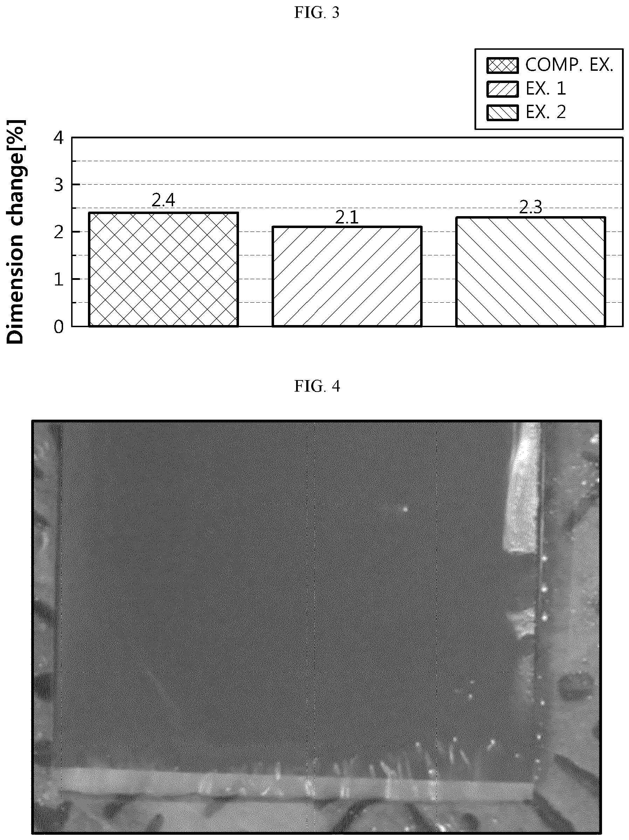

Each of the insulating porous layers according to Examples 1 and 2 and Comparative Example 1 was cut into a size of 15 cm x 15 cm to prepare a specimen. Ethylene carbonate/ethyl methyl carbonate/dimethyl carbonate were mixed at a volume ratio of 3:3:4, and 1.0 M LiPF₆ as a lithium salt was added thereto to prepare an electrolyte. Each insulating porous layer specimen was impregnated with 10 mL of the electrolyte for 10 minutes, and then a change in width and length of each insulating porous layer was measured to calculate a dimensional change. The results are shown as average values. Referring to FIG. 3, Comparative Example 1 shows an increase in length of 2.4% as compared to the initial length of the insulating porous layer. On the contrary, Example 1 and Example 2 show an increase in length of 2.1% and 2.3%, respectively. Therefore, it can be seen that Examples 1 and 2 show a lower increase in dimension as compared to Comparative Example 1.

### Evaluation of Electrolyte Impregnation (2)

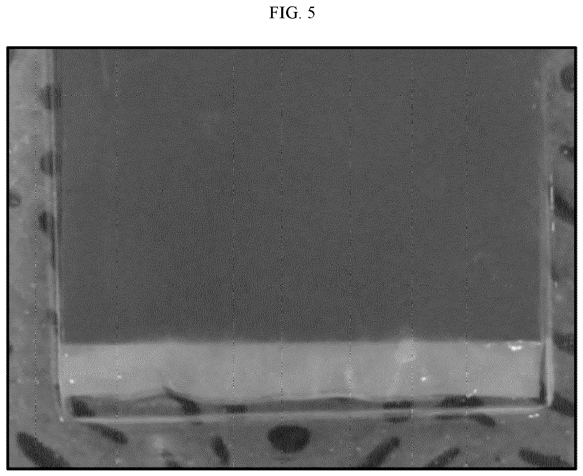

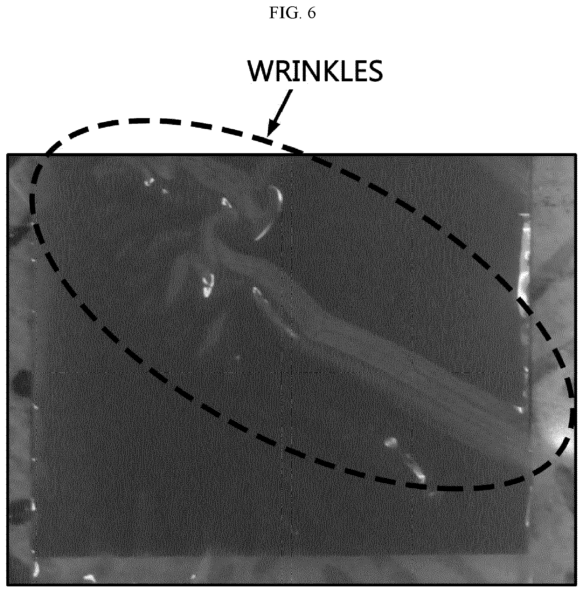

Each of the laminated structures according to Examples 3 and 4 and Comparative Example 2 was cut into a size of 15 cm x 15 cm to prepare a specimen. Ethylene carbonate/ethyl methyl carbonate/dimethyl carbonate were mixed at a volume ratio of 3:3:4, and 1.0 M LiPF₆ as a lithium salt was added thereto to prepare an electrolyte. Each specimen was impregnated with 10 mL of the electrolyte for 1 day, and the appearance of each laminated structure was checked. FIG.4 and FIG. 5 are photographic images illustrating the appearance of Example 3 and that of Example 4, respectively. It can be seen that the insulating porous layers show little change in dimension, and thus the laminated structures maintain their smooth surfaces. FIG. 6 is a photographic image illustrating the appearance of the laminated structure according to Comparative Example 2. It can be seen that the insulating porous layer of Comparative Example 2 undergoes a change in dimension to cause deformation of its appearance.

### Determination of Resistance

Each of the insulating porous layer specimens according to Examples and Comparative Example was determined in terms of resistance as follows. LiPF₆ was dissolved in a mixed solvent containing ethylene carbonate, propylene carbonate and propyl propionate at a volume ratio of 25:10:65 to a concentration of 1 M to prepare an electrolyte. Each insulating porous layer specimen was impregnated with the electrolyte and the electrical resistance was measured by using Multi-probe analyzer (Hioki Co.). It can be seen from the following FIG. 2, that the insulating porous layer specimens according to Examples 1 and 2 show lower resistance as compared to the insulating porous layer specimen according to Comparative Example 1. Referring to FIG. 2, it can be seen that the insulating porous layers according to Examples 1 and 2 show lower resistance as compared to the insulating porous layer according to Comparative Example 1.

## Claims

1. An insulating porous layer for a separator of an electrochemical device comprising inorganic particles and a binder resin, wherein the inorganic particles in the insulating porous layer are present at a ratio of 70-95 wt% based on 100 wt% of the insulating porous layer, and the binder resin comprises an elastomer, wherein the elastomer has a molecular weight (Mw) of 10,000-1,000,000 g/mol, determined by gel permeation chromatography (GPC).

2. The insulating porous layer according to claim 1, wherein the elastomer is present in an amount of 5-50 wt% based on 100 wt% of the binder resin.

3. The insulating porous layer according to claim 2, the elastomer is present in an amount of 5-25 wt% based on 100 wt% of the binder resin.

4. The insulating porous layer according to claim 1, wherein the elastomer comprises at least one selected from the group consisting of natural rubber, nitrile butadiene rubber, acrylonitrile butadiene rubber, styrene-butadiene rubber, chloroprene rubber, butadiene rubber, ethylene-propylene-diene rubber, olefin-based thermoplastic elastomer, urethane-based thermoplastic elastomer, styrene block copolymer, thermoplastic polyester elastomer, thermoplastic copolyester, thermoplastic copolyamide, and acrylated styrene butadiene rubber.

5. The insulating porous layer according to claim 1, wherein the elastomer has a molecular weight (Mw) of 200,000-700,000 g/mol, determined by gel permeation chromatography (GPC).

6. The insulating porous layer according to claim 1, wherein the inorganic particle comprises Al₂O₃, AlOOH, Al(OH)₃, AlN, BN, MgO, Mg(OH)₂, SiO₂, ZnO, TiO₂, BaTiO₃, or a mixture thereof.

7. The insulating porous layer according to claim 1, wherein the inorganic particles have an average particle diameter of 0.001-3 µm.

8. The insulating porous layer according to claim 1, which has a thickness of 0.01-50 µm.

9. A separator for an electrochemical device, wherein the separator is a free standing type separator having the insulating porous layer according to claim 1 alone.

10. An electrochemical device comprising a negative electrode, a positive electrode and a separator interposed between the negative electrode and the positive electrode, wherein the separator is the insulating porous layer according to claim 1.

## Patentansprüche

1. Isolierende poröse Schicht für einen Separator einer elektrochemischen Vorrichtung, umfassend anorganische Teilchen und ein Bindemittelharz, wobei die anorganischen Teilchen in der isolierenden porösen Schicht in einem Verhältnis von 70-95 Gew.-%, bezogen auf 100 Gew.-% der isolierenden porösen Schicht, vorliegen, und das Bindemittelharz ein Elastomer umfasst, wobei das Elastomer ein Molekulargewicht (Mw) von 10.000 bis 1.000.000 g/mol aufweist, bestimmt mittels Gelpermeationschromatographie (GPC).

2. Isolierende poröse Schicht gemäß Anspruch 1, wobei das Elastomer in einer Menge von 5-50 Gew.-%, bezogen auf 100 Gew.-% des Bindemittelharzes, vorliegt.

3. Isolierende poröse Schicht gemäß Anspruch 2, wobei das Elastomer in einer Menge von 5-25 Gew.-%, bezogen auf 100 Gew.-% des Bindemittelharzes, vorliegt.

4. Isolierende poröse Schicht gemäß Anspruch 1, wobei das Elastomer mindestens eines umfasst, das ausgewählt ist aus der Gruppe bestehend aus Naturkautschuk, Nitril-Butadien-Kautschuk, Acrylnitril-Butadien-Kautschuk, Styrol-Butadien-Kautschuk, Chloropren-Kautschuk, Butadien-Kautschuk, Ethylen-Propylen-Dien-Kautschuk, thermoplastisches Elastomer auf Olefinbasis, thermoplastisches Elastomer auf Urethanbasis, Styrol-Blockcopolymer, thermoplastisches Polyester-Elastomer, thermoplastisches Copolyester, thermoplastisches Copolyamid und acryliertem Styrol-Butadien-Kautschuk.

5. Isolierende poröse Schicht gemäß Anspruch 1, wobei das Elastomer ein Molekulargewicht (Mw) von 200.000-700.000 g/mol aufweist, bestimmt mittels Gelpermeationschromatographie (GPC).

6. Isolierende poröse Schicht gemäß Anspruch 1, wobei die anorganischen Teilchen Al₂O₃, AlOOH, Al(OH)₃, AlN, BN, MgO, Mg(OH)₂, SiO₂, ZnO, TiO₂, BaTiO₃ oder eine Mischung davon umfassen.

7. Isolierende poröse Schicht gemäß Anspruch 1, wobei die anorganischen Teilchen einen mittleren Teilchendurchmesser von 0,001 bis 3 µm aufweisen.

8. Isolierende poröse Schicht gemäß Anspruch 1, die eine Dicke von 0,01 bis 50 µm aufweist.

9. Separator für eine elektrochemische Vorrichtung, wobei der Separator ein freistehender Separator ist, der ausschließlich die isolierende poröse Schicht gemäß Anspruch 1 aufweist.

10. Elektrochemische Vorrichtung, umfassend eine negative Elektrode, eine positive Elektrode und einen zwischen der negativen Elektrode und der positiven Elektrode angeordneten Separator, wobei der Separator die isolierende poröse Schicht gemäß Anspruch 1 ist.

## Revendications

1. Couche isolante poreuse pour un séparateur d'un dispositif électrochimique comprenant des particules inorganiques et une résine liante, dans laquelle les particules inorganiques dans la couche isolante poreuse sont présentes dans une proportion de 70 à 95 % en poids sur la base de 100 % en poids de la couche isolante poreuse, et la résine liante comprend un élastomère, dans laquelle l'élastomère présente une masse moléculaire (Mw) de 10 000 à 1 000 000 g/mol, déterminée par chromatographie par perméation de gel (GPC).

2. Couche isolante poreuse selon la revendication 1, dans laquelle l'élastomère est présent en une quantité de 5 à 50 % en poids sur la base de 100 % en poids de la résine liante.

3. Couche isolante poreuse selon la revendication 2, dans laquelle l'élastomère est présent en une quantité de 5 à 25 % en poids sur la base de 100 % en poids de la résine liante.

4. Couche isolante poreuse selon la revendication 1, dans laquelle l'élastomère comprend au moins un élément choisi dans le groupe constitué par le caoutchouc naturel, le caoutchouc nitrile-butadiène, le caoutchouc acrylonitrile-butadiène, le caoutchouc styrène-butadiène, le caoutchouc chloroprène, le caoutchouc butadiène, le caoutchouc éthylène-propylène-diène, l'élastomère thermoplastique à base d'oléfine, l'élastomère thermoplastique à base d'uréthane, le copolymère séquencé styrénique, l'élastomère polyester thermoplastique, le copolyester thermoplastique, le copolyamide thermoplastique et le caoutchouc styrène-butadiène acrylé.

5. Couche isolante poreuse selon la revendication 1, dans laquelle l'élastomère présente une masse moléculaire (Mw) de 200 000 à 700 000 g/mol, déterminée par chromatographie par perméation de gel (GPC).

6. Couche isolante poreuse selon la revendication 1, dans laquelle la particule inorganique comprend Al₂O₃, AlOOH, Al(OH)₃, AlN, BN, MgO, Mg(OH)₂, SiO₂, ZnO, TiO₂, BaTiO₃, ou un mélange de ceux-ci.

7. Couche isolante poreuse selon la revendication 1, dans laquelle les particules inorganiques présentent un diamètre moyen des particules de 0,001 à 3 µm.

8. Couche isolante poreuse selon la revendication 1, laquelle présente une épaisseur de 0,01 à 50 µm.

9. Séparateur pour dispositif électrochimique, dans lequel le séparateur est un séparateur de type autonome présentant uniquement la couche isolante poreuse selon la revendication 1.

10. Dispositif électrochimique comprenant une électrode négative, une électrode positive et un séparateur interposé entre l'électrode négative et l'électrode positive, dans lequel le séparateur est la couche isolante poreuse selon la revendication 1.
